Europäisches Patentamt

European Patent Office

Office européen des brevets

(19)

(11) Publication number: **0 109 028**
**A1**

## (12) EUROPEAN PATENT APPLICATION

(21) Application number: **83111116.6**

(22) Date of filing: **08.11.83**

(51) Int. Cl.³: **A 47 J 37/04**

(30) Priority: **10.11.82 IT 8415182**
**17.10.83 IT 8414183**

(43) Date of publication of application: **23.05.84**
**Bulletin 84/21**

(84) Designated Contracting States: **AT BE CH DE FR GB IT LI LU NL SE**

(71) Applicant: **O.L.M.E.C. di Busato Walter e Motton Giorgio Società di fatto, Via Ca' Marcello, 16, I-30170 - Mestre (Venezia) (IT)**

(72) Inventor: **Busato, Walter, Via Julia, 5, I-30030 Favaro Veneto (Venezia) (IT)**
Inventor: **Motton, Giorgio, Via F. Baracca, 18, I-30030 Olmo di Martellago (Venezia) (IT)**

(74) Representative: **Piovesana, Paolo, Corso del Popolo, 70, I-30172 Venezia-Mestre (IT)**

(54) **Multi-spit roasting jack.**

(57) The multi-spit roasting jack is characterised by comprising a substantially rectangular frame provided in two opposing sides (1, 2) with facing notches (7, 7') for supporting spits (14, 14') provided with a pinion (17, 17') which engages in a member (8) which simultaneously rotates said spits. To the frame retractable legs (22) are applied for supporting on an underlying surface and movable appendices (12, 13) for the engagement with corresponding slots provided in the wind shield (28) of a barbecue and/or for support on the edge of an electric or gas hob.

0109028

This invention relates to a multi-spit roasting jack.

Roasting jacks are known comprising a support structure for one or more spits on to which the food to be cooked is skewered and which are rotated by an electric or clockwork motor, or simply by hand. They are generally placed in proximity to a fire or other heat source, so that the slow rotational speed of the spit, or of each spit, leads to uniform cooking of the food.

Spits are also known for fitting as accessories to conventional gas or electric cookers. These are disposed in the cooking oven, with one end engaged in a corresponding socket provided in the rear wall of said oven and the other end rotatably supported by a support in proximity to the oven aperture. The rotation of said socket, generally effected by means of an electric motor, results in the slow rotation of the spit and the cooking of the food skewered on to it.

Finally, roasting jacks are also known for fitting to conventional barbecues. These essentially comprise a spit which is inserted by its ends into notches provided in the side walls of the wind shield which bounds the brazier. A motor, preferably battery-driven, rotates the spit about its axis.

A roasting jack for fitting to barbecues is also

- 1 -

known (FR-PS 2,161,207), and comprises a plurality of spits supported parallel to each other by means of their ends. Their points are inserted into corresponding holes in the rear wall of the wind shield, whereas in proximity to their grip they rest on a cross-member, close to which there is provided a worm-type operating device in which there engages a pinion rigid with each spit, which is rotated by the rotation of said device.

The aforesaid roasting jacks are constructed in various shapes and sizes in practice, and can be used in practice in the most varied applications. They can be used in fireplaces, in cookers or in barbecues. However, because of the different configurations and dimensions which the various applications require, it has not been possible up to the present time to construct a multiple roasting jack which can be used for all applications, and which can be adapted easily for one or other application.

The object of the invention is to solve this problem by providing a multiple roasting jack which can be used in a fireplace, electric or gas cooker, a barbecue, or a gas or electric hob or the like.

A further object of the invention is to provide a multiple roasting jack which whatever the application can be adapted to the variable measurements of the heat source with which it is associated.

A further object of the inventione is to provide a multiple roasting jack of simple and economical construction, which is easy to clean, and is of reliable and safe operation.

These objects are attained according to the invention by a multiple roasting jack characterised by comprising a substantially rectangular frame provided in its two opposing sides with facing notches for supporting spits provided with a pinion which engages in a member which simultaneously rotates said spits.

Advantageously, the support frame can comprise two rectilinear sides provided with notches, and two C-shaped sides which have their parallel portions connectable in an adjustable manner to said rectilinear sides.

Again according to the invention, the support frame can be provided with retractable support legs.

Advantageously, the member for rotating the spits can be constituted by a chain stretched between two sprocket wheels and having links in which the teeth of the pinion of each spit engage, at least one of said sprocket wheels being connectable to an external member for driving the chain.

Again according to the invention, the three frame sides which do not involve the spit drive member can be provided with removable appendices for engaging in corresponding apertures provided in the walls of the wind shield of a barbecue, and/or for support on the edge of an electric or gas hob.

For use in the cooking oven of a gas cooker, the central spit can have a length greater than the length of the other spits, and its point can be insertable into the complementary cavity of the socket provided in the rear wall of said cooking oven.

A preferred embodiment of the present invention is described in detail hereinafter by way of non-limiting example with reference to the accompanying drawings, in which:

Figure 1   is a perspective view of a roasting jack according to the invention,

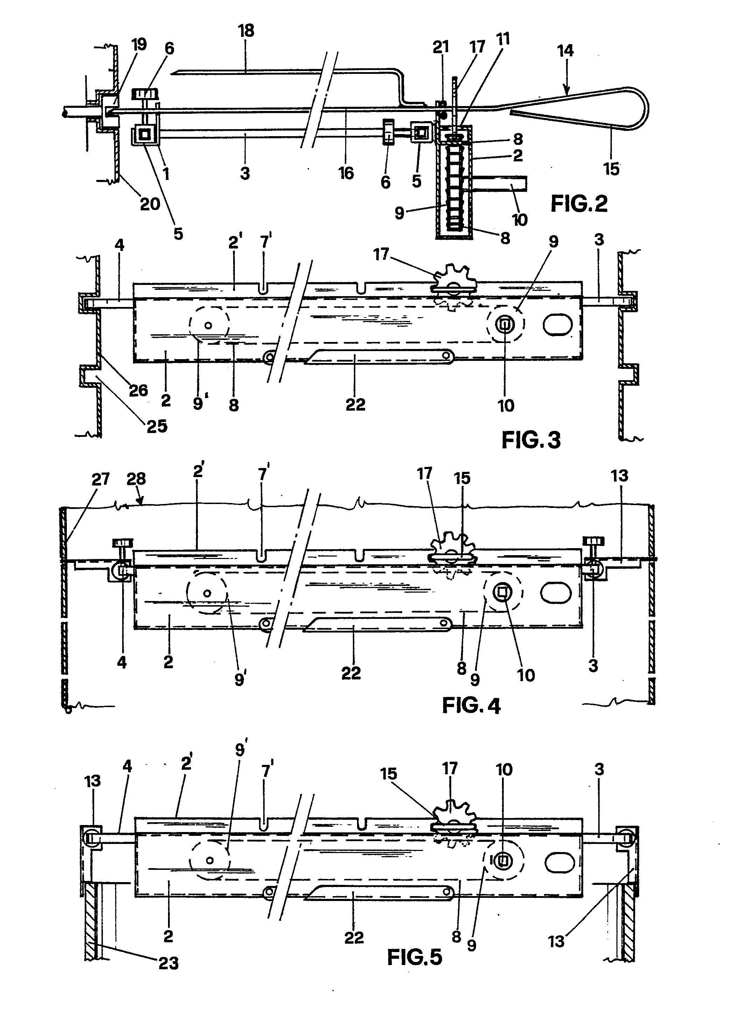

Figure 2   is a vertical cross-section thereof when fitted to the cooking oven of a gas cooker,

Figure 3   is a front view thereof on the line III-III of Figure 2,

Figure 4   is a front view thereof when fitted to the wind shield of a barbecue, and

Figure 5   is a front view thereof when resting on the edge of an electric hob.

As shown in the figures, the roasting jack according to the invention comprises a metal rectangular frame formed from two rectilinear sides 1 and 2, and two further sides 3 and 4 bent to form a C, of which the parallel portions engage in corresponding clamps 5 which are rigid with the sides 1 and 2 and are provided with locking screws 6.

The side 1 is formed from an open section bar comprising a plurality of equidistant notches 7, and the side 2 is formed from a tubular section bar which extends upwards in the form of a ridge 2' comprising an equal number of notches 7' which substantially face the notches 2.

Inside the tubular section bar of the side 2 there is housed a metal chain 8 stretched between two sprocket wheels 9,9', of which the sprocket wheel 9 is provided with a pin which emerges from the tubular section bar as a portion 10 of square cross-section. In a position corresponding with each notch 7' of the ridge 2', the upper surface of the tubular section bar comprises a slot 11 which exposes the underlying chain 8, of which the upper portion is supported by a rigid support bar 8'.

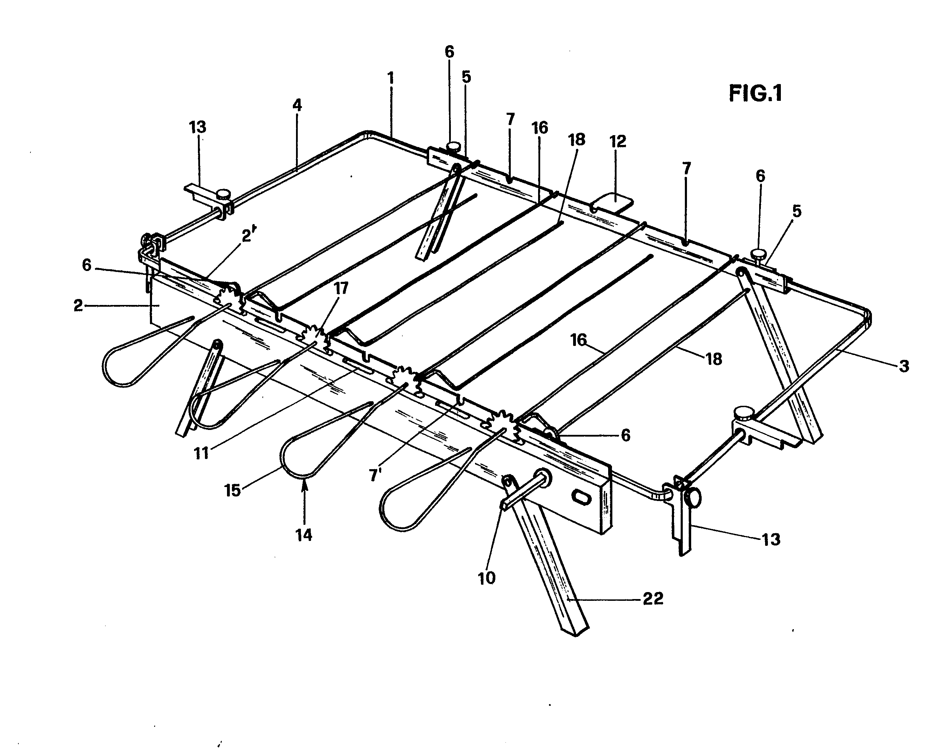

To the rectilinear sides 1, 2 there are fitted two pairs of legs 22, which can be adjusted from an open position for supporting the frame on an underlying surface, to a retracted position (see dashed line in Figure 1), in which they adhere to the relative side. To the side 1 there is also removable fitted an appendix 12, the purpose of which, as will be seen hereinafter, is to engage in the horizontal slot possibly present in the rear wall of a barbecue wind shield.

To the C-shaped sides 3 and 4 there are also fitted further appendices 13, which can engage in corresponding slots provided in the side walls of said wind shield. Besides being removable, said appendices 13 can be positioned at the required point along the corresponding side, and can also be rotated downwards through 90° for the reasons given hereinafter.

The roasting jack according to the invention also comprises a plurality of spits 14. Each of these comprises a grip 15, a rod 16 with a pointed end and having a length exceeding the central portion of the arms 3 and 4, a pinion 17 fixed to said rod 16 in proximity to the grip 15 and arranged to enter the corresponding slot 11 in order to engage in the links of the chain 8, and finally a second rod 18 parallel to the rod 16 and of length less than the central portion of the sides 3 and 4, its purpose being to prevent the food rotating relative to the spit.

If the roasting jack according to the invention is to be used in the cooking oven of an electric or gas cooker, it also comprises a further spit 14', which differs from the other spits 14 only in that the rod 16' is a greater length and has its end faceted so as to be able to engage in the conventional socket 19 possibly present in the rear wall of the oven for the purpose of rotating a spit. In this case, a hook 21 is provided in a position corresponding with the central notch 7' of the side 2 in order to prevent said rod 16' from escaping from said notch.

The operation of the roasting jack according to the invention is as follows. After skewering the food to be cooked on to the spits 14, they are simply rested in the notches 7,7' provided in the sides 1 and 2, and the frame is placed in the vicinity of the heat source. The chain 8 is then operated, preferably by means of an electric motor which engages with the pin 10 of the sprocket wheel 9. By means of the pinions 17, the moving chain 8 rotates the spits 14, which by rotating facilitate slow uniform cooking of the food.

If the roasting jack is to be placed in a conventional fireplace, the legs 22 are lowered to enable the roasting jack to rest on the surface of the fireplace.

If the roasting jack is to be mounted in the cooking oven of a gas cooker, the C-shaped sides 3 and 4 are disengaged from the clamps 5 of the sides 1 and 2, and are then spaced apart to a distance suitable for entering the guides 25 present in the side walls 26 of the oven. After removing the rear appendix 12 and placing the spit 14' in the central notches 7 and 7' of the sides 1 and 2, the frame is inserted into the oven at a height such that the end of the spit 14' engages in the socket 19 provided in the rear

*8*

wall 20 thereof. In this application, in which the legs 22 are in their retracted position, the spits are rotated by virtue of the rotary motion transmitted by the socket 19 to the central spit 14', and from this to the other spits 14 by way of the sprocket wheels 17 and chain 8. During rotation of the spit 14', constant engagement between its pinion 17' and the chain 8 is ensured by the hook 21.

If the roasting jack is to be mounted on a barbecue, the distance between the two sides 3 and 4 is firstly adjusted and the appendix or appendices 13' positioned along them so as to correspond to the positions of the slot or slots provided in the side walls 27 of the wind shield 28, the appendix 12 is then fitted, and the roasting jack, with its legs 22 retracted, is positioned at the required height either by engaging the appendices 12 and 13 in the corresponding slots provided in the wind shield 28 or by resting the C-shaped sides 3 and 4 in corresponding brackets possibly provided at different heights on the side walls 27 of said wind shield.

Finally, if the roasting jack is to be mounted on an electric hob, the appendices 13 are locked on the arms 3 and 4 in a position rotated downwards through 90° such as to enable them to rest on the edge 23 of said hob.

9

C L A I M S

1.    A multi-spit roasting jack characterised by comprising a substantially rectangular frame provided in two opposing sides (1,2) with facing notches (7,7') for supporting spits (14,14') provided with a pinion (17,17') which engages in a member (8) which simultaneously rotates said spits.

2.    A roasting jack as claimed in claim 1, characterised in that the support frame can be dismantled into its component sides, and is of variable dimensions.

3    A roasting jack as claimed in claim 1, characterised in that the support frame comprises two rectilinear sides (1,2) provided with notches (7,7'), and two C-shaped sides (3,4) of which the parallel portions can be adjustably connected to said rectilinear sides (1, 2).

4.    A roasting jack as claimed in claim 1, characterised in that the support frame is provided with retractable support legs (22).

5.    A roasting jack as claimed in claim 1, characterised in that the member for rotating the spits (14) is constituted by a chain (8) stretched between two sprocket wheels (9,9') and having its upper portion supported by a rigid support bar (8'), and further comprising links in which the teeth of the pinion (17) of each spit (14,14') engage, at least one of said sprocket wheels (9,9') being

—  —

connectable to an external member for driving the chain (8).

6. A roasting jack as claimed in claims 1 and 5, characterised in that the side (2) of the support frame is in the form of a box member and houses internally the chain (8), its support bar (8') and the two sprocket wheels (9,9'), one of which has its pivot pin extending externally to the box-like side (2) to form a portion (10) for coupling to the chain drive member, the upper wall of said box-like side (2) being provided with slots, through which the pinions (17,17') of the spits which rest in the notches (7,7') engage in the links of the chain (8).

7. A roasting jack as claimed in claim 1, characterised by comprising, at least on the two sides (3,4) of the support frame which do not comprise notches (7,7'), removable appendices (13) for engaging in corresponding apertures provided in the wind shield (28) of a barbecue and/or for supporting on the edge of an electric or gas hob.

8. A roasting jack as claimed in claim 1, characterised in that each spit (14,14') comprises a grip (15), a rod (16,16') with its end pointed and its length greater than the distance between the corresponding notches (7,7') of the support frame, a pinion (17,17') fixed to said rod (16,16') in proximity to the grip (15), and a second rotation-prevention rod (18), which is parallel to the rod (16,16') and has a length less than the distance between the corresponding notches (7,7').

9. A roasting jack as claimed in claims 1 and 8, characterised by comprising a spit (14'), of which the rod (16) has a length greater than the length of the rods (16) of the other spits (14) and a point which can be inserted into the complementary cavity of the rotating socket (19) normally provided in the rear wall (20) of the oven of an electric or gas cooker.

10. A roasting jack as claimed in claims 1 and 9, characterised by comprising removable means (21) for preventing the pinion (17') of the spit (14') from disengaging from the chain (8).

FIG.1

0109028

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 588 046 (RIDGELY) <br><br> * Column 6, lines 1-60; figures 2-4 * | 1,5,6, 8,9,10 | A 47 J 37/04 |
| X | FR-A-1 367 606 (A. MARTIN) <br><br> * Whole document * | 1,3,5, 6,8,9 | |
| X | US-A-2 854 918 (MERRITT) <br><br> * Whole document * | 1,5,6, 8,9 | |
| A | FR-A-1 424 773 (TUBESSOR S.A.) <br> * Whole document * | 2,3 | |
| X | US-A-3 169 470 (OATLEY) <br> * Whole document * | 1,3,8 | TECHNICAL FIELDS SEARCHED (Int. Cl. ³) <br><br> A 47 J |
| X | US-A-4 154 154 (VIVIAN) <br><br> * Whole document * | 1,4,8, 10 | |
| D,A | FR-A-2 161 207 (A.R.C.O) <br><br> ----- | | |

The present search report has been drawn up for all claims

| Place of search <br> THE HAGUE | Date of completion of the search <br> 08-02-1984 | Examiner <br> SCHARTZ J. |
|---|---|---|